# EUROPEAN PATENT SPECIFICATION

(11) **EP 2 042 548 B1**
(45) Date of publication and mention of the grant of the patent: **14.09.2016**
(21) Application number: 08103769.9
(22) Date of filing: 29.04.2008
(51) Int. Cl.: C08L 3/02, C08L 67/02, C08K 3/22, C08K 3/26, C08K 3/36, C08K 5/00, C08K 5/053

(54) **Starch-based biodegradable material composition**
Auf Stärke basierende biologisch abbaubare Materialzusammensetzung
Composition de matière biodégradable à base d'amidon

(30) Priority: 18.09.2007 CN 200710152829
(43) Date of publication of application: 01.04.2009
(73) Proprietor: Grabio Biotech Corporation, Hsinchu County, Taiwan 30351 (TW)
(72) Inventor: Chen, C. Will, Taipei City (TW); Wang, Ching-Huang, Taipei City (TW); Chen, Chin-Wei, Hsinchu City (TW); Wang, Yun-Ping, Taichung City (TW)
(74) Representative: Kahlhöfer, Hermann

(56) References cited:
- WO-A-2008/072114
- US-A- 5 703 160
- US-B1- 6 184 261
- DATABASE CA [Online] CHEMICAL ABSTRACTS SERVICE, COLUMBUS, OHIO, US; WATANABE, SEIJI ET AL: "Aliphatic polyester -based biodegradable films for raw trash treating system" XP002506547 retrieved from STN Database accession no. 2001:823408 -& JP 2001 316495 A (EKOMA TECH KENKYUSHO K. K., JAPAN; YASUI, JUNICHIRO) 13 November 2001 (2001-11-13)

## Description

This invention relates to a method for making a starch-based biodegradable material composition, more particularly to a method for making a starch-based biodegradable material composition including a biodegradable polyester selected from at least one of an aliphatic polyester of polybutylene succinate and an aliphatic-aromatic copolyester

A conventional biodegradable material composition usually includes a native starch blended with a polymer so as to enhance the mechanical strength of the biodegradable material composition. However, the native starch has two large molecular groups of amylose and amylopectin, which can result in poor blending with the polymer due to stereo-hindrance of the molecular structure of the native starch.

It is known in the art to use a chemically modified starch to enhance the blending efficiency. However, chemical modification of the native starch is relatively complex and has drawbacks, such as undesired chemical residue and low microorganism degradable rate.

Taiwanese patent no. 552290 discloses a biodegradable material composition including an enzyme-hydrolyzed starch, which is prepared by hydrolyzing a native starch using a starch-hydrolyzing enzyme, a polyvinyl alcohol, a plasticizer, and a property-improving agent. Although the biodegradable material composition has excellent biodegradability, films made therefrom have a relatively poor tensile strength and can only be used for production of foam materials or plate materials. Further, reference is made to WO 2008/072114 A disclosing a composition comprising a biodegradable polyester, a thermoplastic starch and a plasticizer, whereas US 5,703,160 discloses a biodegradable composition comprising a starchy compound and a biodegradable polyester.

Therefore, an object of the present invention is to provide a method for making a starch-based biodegradable material composition.

A starch-based biodegradable material composition comprises: an enzyme-hydrolyzed starch; and a biodegradable polyester selected from at least one of an aliphatic polyester of polybutylene succinate and an aliphatic-aromatic copolyester.

According to one aspect of this invention, there is provided a method for making a starch-based biodegradable material composition that comprises: (a) mixing a native starch with a biodegradable polyester so as to form a solid mixture; (b) mixing a starch-hydrolyzing enzyme with a liquid additive so as to form a liquid mixture; and (c) blending the solid mixture and the liquid mixture so as to induce hydrolyzation of the native starch and chemical blending of the hydrolyzed starch and the biodegradable polyester to form the starch-based biodegradable material composition, the biodegradable polyester being selected from at least one of an aliphatic polyester of polybutylene succinate (PBS) and an aliphatic-aromatic copolyester.

In order to enhance properties of the starch-based biodegradable material composition, such as mechanical strength, anti-oxidation, stability, and anti-hardness, the starch-based biodegradable material composition preferably is compounded with additives such as a plasticizer and a strength-improving agent.

In the preferred embodiment, the starch-based biodegradable material composition further includes a plasticizer made from a material selected from the group consisting of glycerol, lecithin, polyethylene glycol, ethylene glycol, propylene glycol, sorbitol, and combinations thereof. More preferably, the plasticizer is selected from the group consisting of glycerol, lecithin, and combinations thereof.

In one preferred embodiment, the aliphatic-aromatic copolyester is polybutylene adipate/terephthalate (PBAT).

In the preferred embodiment, the starch-based biodegradable material composition further includes a strength-improving agent selected from the group consisting of TiO₂, CaO, CaCO₃, silica, and combinations thereof.

Preferably, the enzyme-hydrolyzed starch has a weight ratio to the biodegradable polyester ranging from 0.6 to 2.6, and more preferably, from 1.1 to 2.6.

Preferably, the enzyme-hydrolyzed starch has a weight ratio to the plasticizer ranging from 0.014 to 0.4, and more preferably, from 0.17 to 0.36.

In the preferred embodiment, the enzyme-hydrolyzed starch is prepared by hydrolyzing a native starch using a starch-hydrolyzing enzyme.

It is noted that the activity unit (U) of the starch-hydrolyzing enzyme is a measure of the rate of conversion of the native starch into a reducing sugar end per minute per gram of the starch-hydrolyzing enzyme.

Preferably, the starch-hydrolyzing enzyme has an activity unit ranging from 15000 to 40000 U.

Preferably, the native starch has a weight ratio to the starch-hydrolyzing enzyme not greater than 190, and more preferably, not greater than 100. Preferably, the native starch is selected from the group consisting of tapioca starch, potato starch, gramineae starch, corn starch, wheat starch, legume starch, and combinations thereof. More preferably, the native starch is selected from the group consisting of tapioca starch, corn starch, wheat starch and combinations thereof.

Preferably, the starch-hydrolyzing enzyme is selected from the group consisting of α -amylase, β -amylase, isoamylase, glucoamylase, pullulanase, cyclodextrin glucano-transferase (CGTase), β - fructofuranosidase, glucose isomerase, and combinations thereof. In the preferred embodiment, the starch-hydrolyzing enzyme is α-amylase.

This invention provides a method for making the starch-based biodegradable material composition, including: (a) mixing the native starch with a biodegradable polyester so as to form a solid mixture; (b) mixing the starch-hydrolyzing enzyme with a liquid additive so as to form a liquid mixture; and (c) blending the solid mixture and the liquid mixture so as to induce hydrolyzation of the native starch and chemical blending of the hydrolyzed starch and the biodegradable polyester to form the starch-based biodegradable material composition.

Preferably, the starch-hydrolyzing enzyme remains active within in a temperature ranging from 25°C to 110°C, more preferably, from 55°C to 110°C, and most preferably, from 75°C to 105°C.

Preferably, the liquid additive is selected from water, a plasticizer and combinations thereof.

Preferably, the liquid additive contains water and the plasticizer at a weight ratio ranging from 1:1 to 1:3.

Optionally, a strength-improving agent can be added into the solid mixture. Preferably, addition of the strength-improving agent is conducted prior to step (a).

Preferably, the native starch, the biodegradable polyester and the liquid additive have a weight ratio ranging from 1:0.6:0.3 to 1:2.6:0.5, and more preferably, from 1:1.1:0.3 to 1:2.6:0.5.

It is further described a starch-based biodegradable film made from the starch-based biodegradable material composition.

The starch-based biodegradable film thus formed can be used for making a lightweight raincoat, a shopping bag, a garbage bag, or an agriculture mulch, and decomposes into carbon dioxide and water after a period of use.

This invention additionally provides a method of making the starch-based biodegradable film. The method includes: (a) mixing the native starch with the biodegradable polyester so as to form a solid mixture; (b) mixing the starch-hydrolyzing enzyme with the liquid additive so as to form a liquid mixture; and (c) extruding the solid mixture and the liquid mixture so as to induce hydrolyzation of the native starch and chemical blending of the hydrolyzed starch and the biodegradable polyester to form the starch-based biodegradable material film, the biodegradable polyester being selected from at least one of polybutylene sucinate and an aliphatic-aromatic copolyester.

In the embodiment, the extruding in step (c) is conducted through twin screw extruder techniques.

The merits of this invention will become apparent with reference to the following Examples and Comparative Examples.

### Examples

Table 1 shows the content of each of the components of the starch-based biodegradable material composition of Examples 1-16 and Comparative Examples 1 and 2.

**Table 1**

| | Starch (wt%) | | | Polyester (wt%) | | Liquid additive (wt%) | | | |
|---|---|---|---|---|---|---|---|---|---|
| | Tapioca starch | Wheat starch | Corn starch | PBAT | PBS | enzyme | Glycerol | water | lecithin |
| E1 | 44.8 | - | - | 38.8 | - | 0.5 | 11.9 | 3.5 | 0.5 |
| E2 | 26.1 | - | - | 61 | - | 0.39 | 9 | 3.12 | 0.39 |
| E3 | 32.6 | - | - | 49 | - | 0.5 | 13.1 | 4.3 | 0.5 |
| E4 | 35 | - | - | 52 | - | 0.5 | 9 | 3 | 0.5 |
| E5 | 38.6 | - | - | 46.5 | - | 0.5 | 10.4 | 3.5 | 0.5 |
| E6 | 48 | - | - | 36 | - | 0.5 | 11.2 | 3.8 | 0.5 |
| E7 | 33 | - | - | 50 | - | 0.5 | 12 | 4 | 0.5 |
| * E8 | 34.7 | - | - | 52 | - | 0.52 | 8.8 | 3.16 | 0.52 |
| E9 | 42.1 | - | - | 42.1 | - | 0.55 | 11.2 | 3.8 | 0.25 |
| E10 | 44.9 | - | - | 38.4 | - | 0.26 | 12 | 3.94 | 0.5 |
| E11 | 35 | - | - | 52 | - | 0.5 | 6 | 6 | 0.5 |
| E12 | - | 34.9 | - | 52.5 | - | 0.5 | 8.9 | 3.2 | - |
| E13 | - | - | 35 | 52 | - | 0.5 | 6 | 6 | 0.5 |
| E14 | - | - | 35 | 52 | - | 0.5 | 12 | - | 0.5 |
| E15 | - | - | 35 | 52 | - | 0.5 | - | 12 | 0.5 |
| E16 | - | - | 35 | - | 52 | 0.5 | 9 | 3 | 0.5 |
| CE1 | - | - | 33 | poly lactic acid 50 | | 0.5 | 13 | 3 | 0.5 |
| CE2 | | - | 35 | polycaprol actone 52 | | 0.5 | 9 | 3 | 0.5 |

| | | | | | | | | | |
|---|---|---|---|---|---|---|---|---|---|
| *EB further includes 0.3wt% TiO₂ | | | | | | | | | |

### Examples 1-7 (E1-E7)

A total amount of 100kg resin containing tapioca starch, polybutylene adipate/terephthalate (PBAT, BASF CO. Ecoflex), glycerol, water, lecithin and a starch-hydrolyzing enzyme was prepared in each of the Examples. First, the tapioca starch was put into a container, and the PBAT was then added thereto. The glycerol, water, lecithin and the starch-hydrolyzing enzyme were mixed and were added into the container. The mixture thus formed was extruded using a Twin Screw Extruder (Coperion-Werner&Pfleiderer Co. ZSK92) so as to form a resin pellet of the starch-based biodegradable material composition. The extruding conditions were as follows: The ratio of screw length/screw diameter was 44. The feeding rate was 280kg/hr, and the rotational speed of the screw was about 180rpm. The temperatures of different segments of the extrusion screw were about 30°C, 110°C, 115 °C, 120°C, 125°C, 125°C, 130°C, 135°C, 135°C, 125°C, and 80°C, respectively.

### Example 8 (E8)

The process conditions of Example 8 were similar to those of Examples 1-7, except that 0.3wt% TiO₂ serving as the strength-improving agent was added into the container and mixed with the tapioca starch.

### Examples 9-11 (E9-E11)

The process conditions of Examples 9-11 were similar to those of Examples 1-7, except that the rotational speed of the screw was 250rpm for the extrusion, and the temperatures of the different segments of the extrusion screw were about 30°C, 110 °C, 120°C, 125°C, 125°C, 125°C, 130°C, 135°C, 135°C, 125 °C, and 90°C, respectively.

### Example 12 (E12)

The process conditions of Example 12 were similar to those of Examples 9-11, except that the native starch was wheat starch.

### Examples 13-15 (E13-E15)

The process conditions of Examples 13-15 were similar to those of Examples 9-11, except that the native starch was corn starch.

### Example 16 (E16)

The process conditions of Example 16 were similar to those of Examples 9-11, except that the native starch was corn starch and the biodegradable polyester was polybutylene succinate (PBS, IRE Chemicals Co. Enpol 8086) .

### Comparative Example 1 (CE1)

The process conditions of Comparative Example 1 were similar to those of Examples 1-7, except that that the native starch was corn starch and the biodegradable polyester was poly lactic acid (PLA). The temperatures of different segments of the extrusion screw were about 30°C, 95°C, 95°C, 100°C, 160°C, 170°C, 170°C, 165°C, 150°C, 130°C, and 100°C, respectively. The feeding rate was 300kg/hr. The compounded mixture became paste in the twin screw extruder and was unable to be formed into resin pellet for subsequent film blowing operation.

### Comparative Example 2 (CE2)

The process conditions of Comparative Example 2 were similar to those of Examples 1-7, except that that the native starch was corn starch and the biodegradable polyester was polycaprolactone (PCL, having a melt temperature ranging from 55°C to 65 °C). The temperatures of different segments of the extrusion screw were about 30°C, 95°C, 95°C, 100°C, 115°C, 120°C, 120°C, 110°C, 90°C, 70°C, and 50°C, respectively. The feeding rate was 300kg/hr. The compounded mixture became paste in the twin screw extruder and was unable to be formed into resin pellet for subsequent film blowing operation.

### The blown film condition

### Examples 1-16

The resin pellets of each of Examples 1-16 were fed into a blown film extruder (L/D = 26/1, screw diameter=45mm, die diameter=80mm, die space=1.3mm, rotation rate of screw=0-130rpm, width of air ring=200mm) to form the starch-based biodegradable films having various thicknesses (as shown in Table 2). The film blowing conditions are as follows: the resin pellets were dried under a temperature of 80 °C for 1-4hr. The temperatures of first, second , third, fourth, and fifth barrels were 125±2°C, 130±2°C, 135 ±2°C, 130±20C, and 125±2°C, respectively. The extrusion speed was 18rpm. The extrusion current was 26 amperes. The take-up speed was 13m/min. The blow-up ratio was 3.0. The film had a width of 380mm.

### Commercial product (CP)

A commercial product of a plastic bag made from polyester, which is not a biodegradable material, was used as a comparison. The plastic bag had a length of 50cm, a width of 32cm and a gusset of 18cm long, and a capacity of 15 liters.

### Comparative Example 3 (CE3)

A biodegradable plastic bag, having a trade name of Mater-Bi^{®}, and produced by Novamont Co., had a film thickness of 0.08mm and was used as Comparative Example 3.

### Test of mechanical properties

Mechanical properties including maximum tensile strength, elongation at break, and yield strength in the longitudinal (L) and transverse (T) directions for the biodegradable films of Examples 1-16, the plastic bag of CE3, and the non-biodegradable commercial product (CP) were tested using a tensile strength testing machine (GS-QC-Tester Instrument Enterprise Co., Ltd., GS-1560/20-0230). The test results are shown in Table 2.

**Table 2**

| | Film Thickness (mm) | Maximum Tensile Strength (Mpa) | | Elongation at break (%) | | Yield strength (Mpa) | |
|---|---|---|---|---|---|---|---|
| | | L | T | L | T | L | T |
| E1 | 0.03 | 12.4 | 8.63 | 428.78 | 426.03 | 6.9 | 3.14 |
| E2 | 0.04 | 16.08 | 10.83 | 579.48 | 862.03 | 8.63 | 7.57 |
| E3 | 0.04 | 11.34 | 9.85 | 538.65 | 691.76 | 9.97 | 5.18 |
| E4 | 0.04 | 17.78 | 8.81 | 586.69 | 692.79 | 7.61 | 3.16 |
| E5 | 0.04 | 20.69 | 10.86 | 799.02 | 665.27 | 14.98 | 4.12 |
| E6 | 0.04 | 8.5 | 6.79 | 49.62 | 172.75 | 3.4 | 3.38 |
| E7 | 0.06 | 18.28 | 15.34 | 686.18 | 877.65 | 8.43 | 8.43 |
| *E8 | 0.06 | 11.95 | 4.71 | 586.83 | 652.42 | 5.96 | 2.3 |
| E9 | 0.06 | 10.88 | 3.95 | 510.79 | 542.03 | 6.12 | 2.4 |
| E10 | 0.06 | 7.82 | 4.6 | 335.2 | 649.88 | 3.42 | 2.72 |
| E11 | 0.06 | 6.51 | 5.62 | 289.82 | 630.5 | 2.56 | 2.3 |
| E12 | 0.06 | 14.43 | 5.44 | 541.09 | 722.66 | 5.8 | 2.69 |
| E13 | 0.04 | 22.52 | 10.39 | 684.66 | 674.24 | 11.04 | 4.32 |
| E14 | 0.04 | 15.14 | 14.44 | 1018.19 | 483.02 | 10.95 | 5.45 |
| E15 | 0.06 | 8.68 | 7.74 | 312.31 | 607.44 | 3.09 | 3.87 |
| E16 | 0.03 | 17.36 | 11.4 | 392.98 | 609.04 | 5.6 | 4.29 |
| CE1 | Fail to form a film | | | | | | |
| CE2 | Fail to form a film | | | | | | |
| CP | 0.04 | 22.48 | 120.59 | 539.91 | 676 | 12.63 | 9.66 |
| CE3 | 0.08 | 19.49 | 14.54 | 279.98 | 85.09 | 14.17 | 6.72 |

| | | | | | | | |
|---|---|---|---|---|---|---|---|
| *E8 further includes 0.3wt% TiO₂. | | | | | | | |

From the results shown in Table 2, the maximum tensile strengths of Examples 1-16 are in a ratio to that of the commercial product (CP) ranging from 0.3 to 1, which indicates that the starch-based biodegradable films of Examples 1-16 are suitable for making film products, such as lightweight raincoats, agricultural mulch, storage bags and shopping bags.

In addition, as compared to Comparative Example 3, the starch-based biodegradable films of Examples 1-5, 13, 14, and 16 exhibit a similar or even higher mechanical strength with only one half film thickness of the film of Comparative Example 3.

Moreover, the biodegradable films formed respectively from tapioca starch (E1-11), wheat starch (E12), and corn starch (E13-16), which serve as the native starch, have similar mechanical strengths.

Furthermore, the results show that PBAT polyester (Example 4) and PBS polyester (Example 16) both exhibit a good blending ability with the enzyme-hydrolyzed starch.

### Load capacity testing

The resin pellets of Example 14 were fed into a blown film extruder so as to form a starch-based biodegradable film with a film thickness of 0.025mm, and the film was made into a 15 liter plastic bag having a commercial standard of 50cm x32cm with 18cm gusset. 8 bottles of mineral water, each of which was 0.65kg in weight, were put into the plastic bag. The loaded plastic bag was hung in the air for 2. 5/day. The results show that no cracking was found in the starch-based biodegradable film.

### Biodegradable testing

The starch-based biodegradable film of Example
4 was analyzed based on a standard of IS014855. The testing results show that the starch-based biodegradable film of Example 4 achieves 100% biodegradability in 89/days. In addition, the starch-based biodegradable film of Example 4 has passed EN 13432 and ASTM norm D 6400-04 tests conducted by Organic Waste System laboratory, a GLP laboratory certified by the European Union, and obtained certifications of 'OK COMPOST', 'DIN CERTCO' of the EU, 'COMPOSTABLE' of the USA, and 'GreenPla' of the Japan.

With the inclusion of at least one of the aliphatic polyester of polybutylene succinate and the aliphatic-aromatic copolyester in the method of making a starch-based biodegradable material composition of this invention, the aforesaid drawbackassociatedwith the prior art can be eliminated.

## Claims

1. A method for making a starch-based biodegradable material composition **characterized by**:
(a) mixing a native starch with a biodegradable polyester so as to form a solid mixture;
(b) mixing a starch-hydrolyzing enzyme with a liquid additive so as to form a liquid mixture; and
(c) blending the solid mixture and the liquid mixture so as to induce hydrolyzation of the native starch and chemical blending of the hydrolyzed starch and the biodegradable polyester to form the starch-based biodegradable material composition,
the biodegradable polyester being selected from at least one of polybutylene succinate and an aliphatic-aromatic copolyester.

2. The method of Claim 1, **characterized in that** the starch-hydrolyzing enzyme remains active within a temperature ranging from 25°C to 110°C.

3. The method of Claim 1, **characterized in that** the liquid additive is selected from water, a plasticizer and combinations thereof.

4. The method of Claim 3, **characterized in that** the liquid additive contains water and the plasticizer at a weight ratio ranging from 1:1 to 1:3.

5. The method of Claim 1, **characterized in that** the solid mixture includes a strength-improving agent selected from the group consisting of TiO₂, CaO, CaCO₃, silica, and combinations thereof.

6. The method of Claim 1, **characterized in that** the native starch, the biodegradable polyester and the liquid additive have a weight ratio ranging from 1:0.6:0.3 to 1:2.6:0.5, more preferably from 1:1.1:0.3 to 1:2.6:0.5.

7. The method of any of the preceding claims, further **characterized by** a plasticizer made from a material selected from the group consisting of glycerol, lecithin, polyethylene glycol, ethylene glycol, propylene glycol, sorbitol, and combinations thereof.

8. The method of any of the preceding claims, **characterized in that** the aliphatic-aromatic copolyester is polybutylene adipate/terephthalate.

9. The method of claim 7, **characterized in that** the enzyme-hydrolyzed starch has a weight ratio to the biodegradable polyester ranging from 0.6 to 2.6, more preferably 1.1 to 2.6.

10. The method of Claim 9, **characterized in that** the enzyme-hydrolyzed starch has a weight ratio to the plasticizer ranging from 0.014 to 0.4, more preferably 0.17 to 0.36.

11. The method of Claim 7, **characterized in that** the enzyme-hydrolyzed starch is prepared by hydrolyzing a native starch using a starch-hydrolyzing enzyme, the starch-hydrolyzing enzyme having an activity unit ranging from 15000 to 40000.

12. The method of Claim 11, **characterized in that** the native starch has a weight ratio to the starch-hydrolyzing enzyme not greater than 190, more preferably not greater than 100.

13. The method of Claim 12, **characterized in that** the native starch is selected from the group consisting of tapioca starch, corn starch, wheat starch, potato starch, gramineae starch, legume starch, and combinations thereof.

14. The method of Claim 7, **characterized in that** the plasticizer is selected from the group consisting of glycerol, lecithin, and combinations thereof.

15. The method of Claim 13, **characterized in that** the starch-hydrolyzing enzyme is selected from the group consisting of α-amylase, β-amylase, isoamylase, glucoamylase, pullulanase, cyclodextrin glucano-transferase, β-fructofuranosidase, glucose isomerase, and combinations thereof.

16. The method of any of the preceding claims, **characterized in that** the blending in step (c) is conducted through twin screw extruder techniques.

17. A method of making a starch-based biodegradable film **characterized by**:
(a) mixing a native starch with a biodegradable polyester so as to form a solid mixture;
(b) mixing a starch-hydrolyzing enzyme with a liquid additive so as to form a liquid mixture; and
(c) extruding the solid mixture and the liquid mixture so as to induce hydrolyzation of the native starch and chemical blending of the hydrolyzed starch and the biodegradable polyester to form the starch-based biodegradable material film,
the biodegradable polyester being selected from at least one of polybutylene succinate and an aliphatic-aromatic copolyester.

18. The method of Claim 17, **characterized in that** the extruding in step (c) is conducted through twin screw extruder techniques.

## Patentansprüche

1. Verfahren zum Erzeugen einer auf Stärke basierenden biologisch abbaubaren Materialzusammensetzung **gekennzeichnet durch**:
(a) Vermengen einer natürlichen Stärke mit einem biologisch abbaubaren Polyester derart, dass ein festes Gemisch gebildet wird;
(b) Vermengen eines Stärke-hydrolysierenden Enzyms mit einem flüssigen Additiv derart, dass ein flüssiges Gemisch gebildet wird; und
(c) Vermischen des festen Gemisches und des flüssigen Gemisches derart, dass ein Hydrolysieren der natürlichen Stärke und ein chemisches Vermischen der hydrolysierten Stärke und des biologisch abbaubaren Polyesters bewirkt wird, so dass die Stärke-basierte biologisch abbaubare Materialzusammensetzung gebildet wird,
wobei das biologisch abbaubare Polyester ausgewählt ist aus zumindest einem aus Polybutylen Succinat und einem aliphatisch-aromatischen Copolymer.

2. Verfahren nach Anspruch 1, **dadurch gekennzeichnet, dass** das Stärke-hydrolysierende Enzym innerhalb einer Temperatur zwischen 25°C und 110°C aktiv bleibt.

3. Verfahren nach Anspruch 1, **dadurch gekennzeichnet, dass** das flüssige Additiv ausgewählt ist aus Wasser, einem Weichmacher und Kombinationen davon.

4. Verfahren nach Anspruch 3, **dadurch gekennzeichnet, dass** das flüssige Additiv Wasser und den Weichmacher mit einem Gewichtsverhältnis zwischen 1:1 und 1:3 enthält.

5. Verfahren nach Anspruch 1, **dadurch gekennzeichnet, dass** das feste Gemisch ein festigkeitsverbesserndes Mittel enthält ausgewählt aus der Gruppe bestehend aus TiO₂, CaO, CaCO₃, Siliziumdioxid und Kombinationen davon.

6. Verfahren nach Anspruch 1, **dadurch gekennzeichnet, dass** die natürliche Stärke, das biologisch abbaubare Polyester und das flüssige Additiv ein Gewichtsverhältnis zwischen 1:0,6:0,3 und 1:2,6:0,5, besonders bevorzugt zwischen 1:1,1:0,3 und 1:2,6:0,5 haben.

7. Verfahren nach einem der vorhergehenden Ansprüche, weiterhin **gekennzeichnet durch** einen Weichmacher erzeugt aus einem Material ausgewählt aus der Gruppe bestehend aus Glycerin, Lecithin, Polyethylenglykol, Ethylenglykol, Propylenglykol, Sorbitol und Kombinationen davon.

8. Verfahren nach einem der vorhergehenden Ansprüche, **dadurch gekennzeichnet, dass** das aliphatisch-aromatische Copolyester Polybutylenadipat/teraphthalat ist.

9. Verfahren nach Anspruch 7, **dadurch gekennzeichnet, dass** die Enzymhydrolysierte Stärke ein Gewichtsverhältnis zu dem biologisch abbaubaren Polyester zwischen 0,6 und 2,6, besonders bevorzugt zwischen 1,1 und 2,6 hat.

10. Verfahren nach Anspruch 9, **dadurch gekennzeichnet, dass** die Enzymhydrolysierte Stärke ein Gewichtsverhältnis zu dem Weichmacher zwischen 0,014 und 0,4, besonders bevorzugt zwischen 0,17 und 0,36 hat.

11. Verfahren nach Anspruch 7, **dadurch gekennzeichnet, dass** die Enzymhydrolysierte Stärke bereitgestellt wird durch Hydrolysieren einer natürlichen Stärke mittels eines Stärke-hydrolysierenden Enzyms, wobei das Stärke-hydrolysierende Enzym eine Aktivitätseinheit zwischen 15000 und 40000 hat.

12. Verfahren nach Anspruch 11, **dadurch gekennzeichnet, dass** die natürliche Stärke ein Gewichtsverhältnis zu dem Stärke-hydrolysierenden Enzym nicht größer als 190, besonders bevorzugt nicht größer als 100 hat.

13. Verfahren nach Anspruch 12, **dadurch gekennzeichnet, dass** die natürliche Stärke ausgewählt ist aus der Gruppe bestehend aus Tapoikastärke, Maisstärke, Weizenstärke, Kartoffelstärke, Gramineaestärke, Leguminosenstärke und Kombinationen davon.

14. Verfahren nach Anspruch 7, **dadurch gekennzeichnet, dass** der Weichmacher ausgewählt ist aus der Gruppe bestehend aus Glycerin, Lecithin und Kombinationen davon.

15. Verfahren nach Anspruch 13, **dadurch gekennzeichnet, dass** das Stärke-hydrolysierende Enzym ausgewählt ist aus der Gruppe bestehend aus α-Amylase, β-Amylase, Isoamylase, Glucoamylase, Pullulanase, Cyclodextrin-Glucanotransferase, β-Fructofuranosidase, Glucoseisomerase und Kombinationen davon.

16. Verfahren nach einem der vorhergehenden Ansprüche, **dadurch gekennzeichnet, dass** das Vermischen in Schritt (c) mittels Doppelschneckenextruder-Techniken durchgeführt wird.

17. Verfahren zum Erzeugen eines auf Stärke basierenden biologisch abbaubaren Films **gekennzeichnet durch**:
(a) Vermengen einer natürlichen Stärke mit einem biologisch abbaubaren Polyester derart, dass ein festes Gemisch gebildet wird;
(b) Vermengen eines Stärke-hydrolysierenden Enzyms mit einem flüssigen Additiv derart, dass ein flüssiges Gemisch gebildet wird; und
(c) Extrudieren des festen Gemisches und des flüssigen Gemisches derart, dass ein Hydrolysieren der natürlichen Stärke und ein chemisches Vermischen der hydrolysierten Stärke und des biologisch abbaubaren Polyesters bewirkt wird, so dass die Stärke-basierte biologisch abbaubare Materialzusammensetzung gebildet wird,
wobei das biologisch abbaubare Polyester ausgewählt ist aus zumindest einem aus Polybutylen Succinat und einem aliphatisch-aromatischen Copolymer.

18. Verfahren nach Anspruch 17, **dadurch gekennzeichnet, dass** das Extrudieren in Schritt (c) mittels Doppelschneckenextruder-Techniken durchgeführt wird.

## Revendications

1. Procédé de fabrication d'une composition de matériau biodégradable à base d'amidon, **caractérisé par** .
(a) le mélange d'un amidon naturel avec un polyester biodégradable de manière à former un mélange solide ;
(b) le mélange d'un enzyme d'hydrolysation d'amidon avec un additif liquide de manière à former un mélange liquide ; et
(c) le brassage du mélange solide et du mélange liquide de manière à induire l'hydrolisation de l'amidon naturel et le brassage chimique de l'amidon hydrolysé et du polyester biodégradable pour former la composition de matériau biodégradable à base d'amidon,
le polyester biodégradable étant sélectionné parmi au moins le succinate de polybutylène et le copolyester aliphatique aromatique.

2. Procédé selon la revendication 1, **caractérisé en ce que** l'enzyme d'hydrolysation d'amidon reste actif dans une fourchette de température de 25 °C à 110°C.

3. Procédé selon la revendication1, **caractérisé en ce que** l'additif liquide est sélectionné parmi l'eau, un plastifiant et leurs combinaisons.

4. Procédé selon la revendication 3, **caractérisé en ce que** l'additif liquide contient de l'eau et le plastifiant dans un ratio de poids allant de 1:1 à 1:3.

5. Procédé selon la revendication 1, **caractérisé en ce que** le mélange solide comprend un agent d'amélioration de résistance sélectionné dans le groupe composé de TiO₂, CaO, CaCO₃, silice et leurs combinaisons.

6. Procédé selon la revendication 1, **caractérisé en ce que** l'amidon naturel, le polyester biodégradable et l'additif liquide ont un ratio de poids allant de 1:0,6:0,3 à 1:2,6:0,5, plus préférentiellement de 1:1,1:0,3 à 1:2,6:0,5.

7. Procédé selon l'une quelconque des revendications précédentes, **caractérisé par** un plastifiant fait d'un matériau sélectionné dans le groupe composé de glycérol, lécithine, polyéthylène glycol, éthylène glycol, propylène glycol, sorbitol et leurs combinaisons.

8. Procédé selon l'une quelconque des revendications précédentes, **caractérisé en ce que** le copolyester aliphatique aromatique est du polybutylène adipate/téréphtalate.

9. Procédé selon la revendication 7, **caractérisé en ce que** l'amidon hydrolysé par enzyme a un ratio de poids par rapport au polyester biodégradable allant de 0,6 à 2,6, plus préférentiellement 1,1 à 2,6.

10. Procédé selon la revendication 9, **caractérisé en ce que** l'amidon hydrolysé par enzyme a un ratio de poids par rapport au plastifiant allant de 0,014 à 0,4, plus préférentiellement 0,17 à 0,36.

11. Procédé selon la revendication 7, **caractérisé en ce que** l'amidon hydrolysé par enzyme est préparé en hydrolysant un amidon naturel en utilisant un enzyme d'hydrolysation d'amidon, l'enzyme d'hydrolysation d'amidon ayant une unité d'activité allant de 15000 à 40000.

12. Procédé selon la revendication 11, **caractérisé en ce que** l'amidon naturel a un ratio de poids par rapport à l'enzyme d'hydrolysation de l'amidon ne dépassant pas 190, plus préférentiellement ne dépassant pas 100.

13. Procédé selon la revendication 12, **caractérisé en ce que** l'amidon naturel est sélectionné dans le groupe composé de fécule de tapioca, de fécule de maïs, de fécule de blé, de fécule de pomme de terre, de fécule de graminées, de fécule de légumes et leurs combinaisons.

14. Procédé selon la revendication 7, **caractérisé en ce que** le plastifiant est sélectionné dans le groupe composé de glycérol, lécithine et leurs combinaisons.

15. Procédé selon la revendication 13, **caractérisé en ce que** l'enzyme d'hydrolysation d'amidon est sélectionné dans le groupe composé de α-amylase, β-amylase, isoamylase, glucoamylase, pullulanase, cyclodextrine glucano-transférase, β-fructofuranosidase, glucose isomérase et leurs combinaisons.

16. Procédé selon l'une quelconque des revendications précédentes, **caractérisé en ce que** le passage de l'étape (c) est effectué par des techniques d'extrudeuse à vis jumelle.

17. Procédé de fabrication d'un film biodégradable à base d'amidon, **caractérisé par** :
(a) le mélange d'un amidon naturel avec un polyester biodégradable de manière à former un mélange solide ;
(b) le mélange d'un enzyme d'hydrolysation d'amidon avec un additif liquide de manière à former un mélange liquide ; et
(c) l'extrusion du mélange solide et du mélange liquide de manière à induire une hydrolisation de l'amidon naturel et le brassage chimique de l'amidon hydrolysé et du polyester biodégradable pour former le film de matériau biodégradable à base d'amidon,
le polyester biodégradable étant sélectionné parmi au moins le succinate de polybutylène et un copolyester aliphatique aromatique.

18. Procédé selon la revendication 17, **caractérisé en ce que** l'extrusion de l'étape (c) est réalisée par des techniques d'extrudeuse à vis jumelle.
